## Europäisches Patentamt

(19) **European Patent Office**

**Office européen des brevets**

(11) Veröffentlichungsnummer: **0 283 441**
**A2**

(12) # EUROPÄISCHE PATENTANMELDUNG

(21) Anmeldenummer: **88810168.0**

(22) Anmeldetag: **16.03.88**

(51) Int. Cl.⁴: **F 21 Q 3/00**
**B 64 F 1/18**

(30) Priorität: **16.03.87 CH 974/87**

(43) Veröffentlichungstag der Anmeldung:
**21.09.88 Patentblatt 88/38**

(84) Benannte Vertragsstaaten:
**AT BE DE FR IT NL SE**

(71) Anmelder: **META-FER AG**
**Fabrikstrasse 10**
**CH-9470 Buchs (CH)**

(72) Erfinder: **Vadseth, Jan E.**
**Joachimsbüel**
**CH-9475 Sevelen (CH)**

(74) Vertreter: **Büchel, Kurt F., Dr.**
**Patentanwalt Dr. Kurt F. Büchel Bergstrasse 297**
**FL-9495 Triesen (LI)**

(54) **Beleuchtung.**

(57) Die Erfindung betrifft einen Beleuchtungskörper für den Einbau in einer Ebene, insbesondere für Flughäfen, mit der Aufgabe, in optimaler Weise Licht in zwei entgegengesetzte Richtungen in energietechnisch sparsamer Weise mit einem Minimum an elektrischem Strom abzustrahlen. Er soll platzsparend gebaut sein und gegenüber rauhem Betrieb durch Schneeräumgeräte oD.dgl. nicht in seiner Funktion beeinträchtigt werden; er weist folgende Merkmale auf:

a. zwei flache Prismenraster (1,2) sind in einem Prismenhalter (5) horizontal eingesetzt;

b. unter jedem Prismenraster (1,2) ist eine Lichtquelle (3) angeordnet;

c. diese sind gegensinnig zueinander angeordnet und seitlich gegeneinander versetzt;

d. die Oberfläche der Oberseite des Prismenhalters (5) ist, in Richtung zum Lichtstrahl (25,26), an der diesem abgewandten Seite des Prismenrasters (1,2) und/oder seitlich desselben keilförmig oder stromlinienförmig ansteigend ausgebildet.

EP 0 283 441 A2

**Beschreibung**

## BELEUCHTUNGSKOERPER

Die Erfindung betrifft einen Beleuchtungskörper für den Einbau in einer Ebene. Insbesondere bei Flughäfen werden seit geraumer Zeit Beleuchtungen montiert, die einem anfliegenden Flugzeug, oder auf einer Rollbahn rollenden Flugzeugen den richtigen Weg signalisieren, bzw. Mittellinien oder Begrenzungen sichtbar machen. Solche Beleuchtungen müssen, da die Pisten zumeist in zwei Richtungen verwendet werden, auch in zwei Richtungen Licht abstrahlen. Die Leuchtkegel unterliegen einer Norm, deren Einhaltung die Flugsicherheit erhöht.

Viele unterschiedliche Konstruktionen wurden hiefür entwikkelt und sind dem Fachmann bekannt. Beispielsweise sei auf die US-A 4382274 und die US-A 4396972 verwiesen.

Die Konstruktion nach der Lehre der US-A 4396972 hat jedoch den Nachteil, dass sie, infolge des aufgestellten Linsensystems, aus der Ebene der Piste deutlich herausragt, so dass ein unbeabsichtigtes Ueberrollen mit grosser Geschwindigkeit unangenehme Folgen für ein Flugzeug haben kann (Schleudern, Reifenplatzer, usw.). Ausserdem kann sie mittels Schneepflug nicht überfahren werden, ohne Schaden zu nehmen, bzw. muss der Schneepflug auf eine relativ hohe Einstellung über Grund gebracht werden.

Die US-A 4382274 beschreibt ebenso ein System mit in beiden Richtungen abstrahlenden Lampen, die mit einem Gehäuse und darin aufgestellten Prismen völlig in die Oberfläche einer Piste gesetzt sind und über längere Lichtaustrittskanäle verfügen, die in die Pistenoberfläche eingefräst sind. Diese Konstruktion ist deshalb nachteilig, da sich sehr leicht Schmutz, Eis usw. in den Kanälen festsetzen kann, wodurch der Lichtaustritt empfindlich behindert ist. Darüber hinaus erfordern diese Lichtaustrittskanäle eine relativ aufwendige Montagearbeit und viel Platz für die Beleuchtungen.

Eine andere Art von Beleuchtungen ist in der DE-C 1183455 und in der EP-B1 0022106 beschrieben. Dabei sind flache Prismen vorgesehen, die in die Ebene der Piste integrierbar sind, so dass es weder zu einem Zusetzen von Oeffnungen, noch zu Störungen bei Landevorgängen von Flugzeugen kommen kann.

Die Lehre der DE-C 1183455 sieht einstückige Prismen vor, die infolge von lichtoptischen Vorgängen (wie z.B. Totalreflexion) usw. im Glas den Nachteil haben, dass Licht nur mit einer relativ grossen Streuung abgestrahlt werden kann, die der Norm der Leuchtkegel widerspricht.

Die Prismen in der EP-B1 0022106 sind in mehrere Prismen zu einem Prismenraster unterteilt, der eine exakte, streufreie Lichtabgabe ermöglicht. Die EP-B1 gibt jedoch keine Lehre für das Abstrahlen von Licht in zwei Richtungen, während die DE-C 1183455 zwei Möglichkeiten vorsieht, Licht in zwei Richtungen abzustrahlen. In dem einen Fall sind zwei Lampen vorgesehen, die über je eine Linse Licht auf ein einziges Prisma werfen, wodurch das Licht sowohl in die eine als auch in die andere Richtung gebrochen wird. Durch diese Art von Beleuchtung ist es nicht möglich, eine den heute geltenden Vorschriften entsprechende zweiseitige Beleuchtung zu schaffen, da die Streuung rund um das Einzelprisma sehr gross ist. Darüber hinaus kann etwa in der Mitte über dem Prisma ein Lichtmaximum durch sich kreuzende Lichtstrahlen der einen und der anderen Lampe entstehen, welches unter Umständen, insbesondere bei Nebel oder staubbelasteter Luft einen Piloten, der seitlich ansteuert, verwirren kann. Ausserdem führen solche Vorgänge zu einem Lichtverlust und zu einer unnötigen Erwärmung des Prismas.

Die zweite Variante in der DE-C sieht zwei Prismen vor, die von nur einer Lichtquelle mit Licht beschickt werden, und entlang einer Linie in zwei entgegengesetzten Richtungen Licht abstrahlen. Diese Variante ist infolge der nicht gänzlich ausnutzbaren Lichtstrahlung der Lampe energietechnisch un günstig, da die Lichtquelle mehr als doppelt (gemessen an dem Licht einer Lichtquelle der obigen Variante) so viel Licht produzieren muss, wodurch der Stromverbrauch im Vergleich zur ersten Variante wesentlich höher ist. Ein zu grosser Teil dieses Lichtes wird in Wärme umgewandelt, wodurch der Beleuchtungskörper einer noch höheren thermischen Belastung zwischen Betrieb und Stillstand ausgesetzt ist. Darüber hinaus sind auch in dieser Variante optische Linsen vorgesehen, die einen zusätzlichen Bauteilaufwand, sowie ein energietechnisch ungünstiges Lichtschluckverhalten zeigen. Beide Konstruktionen (nach der DE-C und nach der EP-B1) weisen den Nachteil auf, gegenüber rauhem Angriff von Schneepflügen od. dgl. keinen Schutz zu bieten. Die Oberfläche der Prismen, bzw. Prismenraster wird daher häufig in der Wintersaison zerstört, wodurch die Lichtstreuung erhöht wird und die Funktionstüchtigkeit der Beleuchtungen nachlässt.

Dieses Problem ist bei einer anderen Beleuchtungsart für Rundumlicht nach der US-A 3999054 durch strahlenförmig rund um einen Linsenkörper angebrachte Erhebungen reduziert. Der Beleuchungskörper nach dieser US-A bietet jedoch keine Möglichkeit einer exakten Abstrahlung von Licht in zwei genau definierte entgegengesetzte Richtungen.

Das Abstrahlen von Licht bzw. Leuchtkegeln in einander entgegengesetzte Richtung zeigt auch die schwedische Offenlegungsschrift SE-B 449600. Dort waren zwei miteinander einstückig verbundene Umlenkprismen unterhalb des durchsichtigen Dekkels angeordnet. Die um 180° versetzte, gestufte Ausbildung an der Lichteintrittsseite sorgte für das Abstrahlen der Leuchtkegel in beide Richtungen. Eine einzige Glühbirne mit einem einzigen Reflektor sorgte für das Erzeugen des Lichtes. Die beiden Umlenkprismen brachen die Lichtstrahlen und warfen sie gegen die gestufte Lichteintrittsfläche des Deckels, aus dem sie dann in dem gewünschten Winkel austraten. Die Ausbildung erhöhte jedoch sodann wieder die uner wünschte Streuung, wenn der Deckel nicht so lamellenförmig unterteilt war, wie dies bei der europäischen Patentschrift vorgeschrieben war.

Der grosse Aufwand für die mehreren Präzisions-Glaskörper bzw. für die genaue Relativanordnung der Umlenkprismen zum Deckel bei einer der SE-B entsprechenden Beleuchtungsvorrichtung machte dieselbe relativ unwirtschaftlich. Ausserdem fielen bei dem Ausfall der einzigen Glühbirne gleichzeitig beide Leuchtkegel aus, wodurch die Wirkungsweise der Beleuchtungsvorrichtung schlagartig um 100 % reduziert ist. Totalreflexion und Lichtbrechungsverluste an den häufigen Grenzstellen Glas/Luft reduzieren ausserdem den Wirkungsgrad.

Die Erfindung hat es sich nun daher zur Aufgabe gesetzt, einen Beleuchtungskörper zu schaffen, der in optimaler Weise Licht in zwei entgegengesetzte Richtungen abzustrahlen erlaubt, in energietechnisch sparsamer Weise mit einem Minimum an elektrischem Strom auskommt, platzsparend gebaut werden kann und gegenüber rauhem Betrieb durch Schneeräumgeräte od. dgl. nicht in seiner Funktion beeinträchtigt werden soll.

Darüber hinaus sollen die Beleuchtungskörper derart in die Oberfläche einer Piste od.dgl. integrierbar sein, dass das Darüberfahren beispielsweise von mit grossen Geschwindigkeiten landenden Flugzeugen ohne Beeinträchtigung erfolgen kann.

Sämtliche gestellten Aufgaben werden durch die Merkmale des Anspruches 1 in erstmals völlig zufriedenstellender Art und Weise gelöst. Die Prismenraster erlauben das Abstrahlen eines exakt umgrenzten Lichtstrahles mit nur minimaler Streuung in zwei Richtungen. Die separate Anordnung einer einzelnen Lichtquelle für jeden Prismenraster, bzw. für jede Abstrahlrichtung stellt die optimale Energieausbeute sicher. Schon bei der Verwendung marktüblicher Parabolspiegel entfallen zusätzliche Linsensysteme. Das seitliche Versetzen der Prismenraster und Lichtquellen erlaubt eine platzsparende Ausbildung des gesamten Beleuchtungskörpers und verhindert bei Nebel oder staubbeladener Luft ungewünschte Lichtmaxima oberhalb des Beleuchtungskörpers. Die ansteigende Ausbildung der Oberfläche des Prismenhalters verhindert das Schleifen eines Schneepfluges od.dgl. über die Prismenraster. Die Bauhöhe ist jedoch kaum merkbar erhöht. Bei dem Ausfall einer Lichtquelle funktioniert der Beleuchtungskörper wenigstens noch zu 50 %, nämlich in die andere Richtung.

Die stromlinienförmige Ausbildung verhindert grösstenteils das Abschleifen der Oberfläche der Prismenraster durch Staub oder Sandpartikeln, die durch Austrittgase von Düsentriebwerken über die Piste gefegt werden.

Weitere vorteilhafte Ausbildungen der Erfindung sind in den Kennzeichen der Unteransprüche beschrieben.

Der Anspruch 2 gibt eine gute Verbindung zwischen den Prismenrastern und dem Prismenhalter an.

Das Einkleben der Prismenraster mit einem Einkomponentenkleber führt unter Anwendung der weiteren Merkmale des Anspruches 2 zu einer hervorragenden Stabilität des Prismenhalters und zu einer unübertroffenen Dichtheit, wobei die Einzelscheiben der Prismenraster entsprechend dem Kennzeichen des Anspruches 3 in chemischer Hinsicht vorteilhafterweise mit dem gleichen Kleber verbunden werden. Als besonders vorteilhafter Kleber wurde jener gemäss Anspruch 4 gefunden. Die Abschrägung von 45° der Aufnahmeflächen für die Prismenraster nützt dabei die Zugscherfestigkeit des Klebers für eine gute Kraftübertragung - bei Druck von oben auf einen Prismenraster - aus.

Der Kleber kann weiss oder gefärbt ausgebildet sein, wobei weiss am wenigsten Lichtenergie schluckt, schwarz jedoch ideal für das Verhindern von Lichtabstrahlungen durch die Klebeschicht ist bzw. verhindert, dass irgendwelche Lichtstrahlen in ungewünschtem Winkel abgestrahlt werden können. Sie werden schon vorher in Wärme umgewandelt. Einfärbung mit anderen Farben kann die Färbung des abgestrahlten Lichtes in gewünschtem Umfang beeinflussen (z.B. rot, grün, blau, usw.)

Zwischen den Einzelscheiben des Prismenrasters können auch entsprechend dem Anspruch 5 dünne Metallfolien zur Verbesserung des Lichtaustrittes wie auch zur Verbesserung der thermischen Wärmeableitung vorgesehen sein. Es kommen dafür insbesondere Gold, Silber und Aluminium bzw. antikorrosive Legierungen daraus in Frage. Die Aluminiumfolien sind vorzugsweise 1/10 mm dick, hart und glatt. Die Metallfolien können auch verschiedene Stärken aufweisen. Ausserdem können sie seitlich aus dem Prismenraster herausragen, um gegebenenfalls umgebogen direkt mit dem Metall des Prismenhalters zu kontaktieren. Die Folien leiten somit in idealer Form Wärme aus dem Prisma ab. Sie können auch Dehnspannungen ausgleichen.

Eine Filterscheibe gemäss der Variante nach Anspruch 6 erlaubt das Licht entsprechend den Bedürfnissen einzufärben oder schädliche Wärmestrahlen vom Deckel fernzuhalten, was insbesondere bei hohen Lichtleistungen und langer Strahlungsdauer praktisch sein kann. Eine gasdichte Trennung oder ein Vakuum verhindert darüber hinaus das Übertragen von Konvektionswärme der Lichtquelle auf den Deckel. Die Reduktion der Erwärmung der Prismenraster ist immer bei langer Betriebsdauer wichtig, um die Lebensdauer zu erhöhen. Dies wird auch durch die Merkmale des Anspruches 9 begünstigt.

Durch die Massnahmen der Ansprüche 7 und/oder 8 wird eine mechanische Zerstörung der Erhebungen des Prismenhalters wirksam verhindert, bzw. auf ein Mindestmass reduziert.

Die Merkmale des Anspruches 8 beschreiben ausserdem eine vorteilhafte Konstruktion für eine Flugfeldbeleuchtung, die sehr rasch befestigt werden kann, bzw. sehr rasch aus ihrer Befestigung wieder entfernt werden kann, trotzdem aber sicher und stabil gehalten ist und Elastizität in axialer Richtung zulässt. Ein unbeabsichtigtes Verdrehen eines erfindungsgemässen Beleuchtungskörpers aus seiner Position ist auch verhindert.

Die zusätzliche z.B. relativ weiche Schutzabdeckung für die Prismenraster gemäss Anspruch 10 wird zwar selbst relativ leicht zerstört, ist jedoch billig in der Herstellung und leicht austauschbar. Sie kann entweder in Form ·einer Folie oder in Form eines Schutzlackes aufgebracht werden. Das Ablösen erfolgt in beiden Fällen mit bekannten Massnahmen. Eloxal o.dgl. für den Prismenhalter erhöht hingegen infolge der Härte dessen Lebensdauer.

Für bestimmte Fälle wurde eine gezielte Streuung von Licht in seitliche Streubereiche in einem bestimmten, von der Hauptrichtung divergierenden Winkel gefordert. Eine solche Streuung wird erfindungsgemäss durch die Variante nach Anspruch 9 erzielt. Die Ausbildung des Schliffes nur im mittleren Bereich hat den Vorteil, dass aus dem leuchtstärksten Bereich etwas Licht für die Randbereiche abgezweigt wird, was der Gleichmässigkeit des Leuchtkegels entgegenkommt.

Die Reduktion der Erwärmung des Deckels ist auch Aufgabe des Reflektors (Anspruch 9), wobei der erfindungsgemässe Reflektor ein einfaches auf dem Markt erhältliches Massenprodukt ist. Herkömmliche Reflektoren für Flugfeldbeleuchtungen sind oft teure Spezialanfertigungen, die durch ihre spezielle Formgebung Einfluss auf den Leuchtkegel nehmen. Diese Einflussnahme ist bei der Erfindung aufgrund ihrer anderen Merkmale, überflüssig.

Die erfindungsgemässen Beleuchtungskörper können nach Anspruch 11 auch als Signalkörper auf Strassen ausserhalb von Flugplätzen vorgesehen werden,wodurch auch dort die Verkehrssicherheit erhöht werden kann, ohne eine Beeinträchtigung des Verkehrs herbeizuführen. Die Beleuchtung wäre im Vergleich zu den bisher bekannten Rückstrahlelementen ("Katzenaugen") betriebssicher und könnte im Winter bei Schneeräumung direkt überfahren werden, ohne Beschädigungen zu erleiden.

Die Verwendung einer Beleuchtungsvorrichtung entsprechend der Erfindung bringt im täglichen Strassenverkehr verschiedenste Vorteile, wie z.B. die Einsparung von Säulen oder Oberleitungsverspannungen; ausserdem wird die Aufmerksamkeit eines Autofahrers üblicherweise stets von der Fahrbahn mehr in Anspruch genommen, als von Signalen in der Höhe. Aber natürlich können erfindungsgemässe Beleuchtungsvorrichtungen auch für herkömmliche Anstrahlzwecke, wie z.B. für die Werbung oder Beleuchtung von Monumenten o.dgl. verwendet werden, wobei sie bei solchen Einsätzen gegenüber anderen Lösungen das Sichtfeld nicht zu beeinträchtigen vermögen.

An Hand der Zeichnungen wird die Erfindung beispielhaft näher erläutert. Es zeigen dabei

Fig. 1 einen Beleuchtungskörper mit zwei gegeneinander gerichteten flachen Prismenrastern, geschnitten im Aufriss;

Fig. 2 die Draufsicht dazu;

Fig. 3 einen geringfügig unterschiedlich ausgestalteten Beleuchtungskörper in einem Zustand vor der Montage, im im Schrägriss;

Fig. 4 ein Detail der Oberflächenausbildung des Prismenhalters

Fig. 5 ein Detail der Verriegelung im Schnitt;

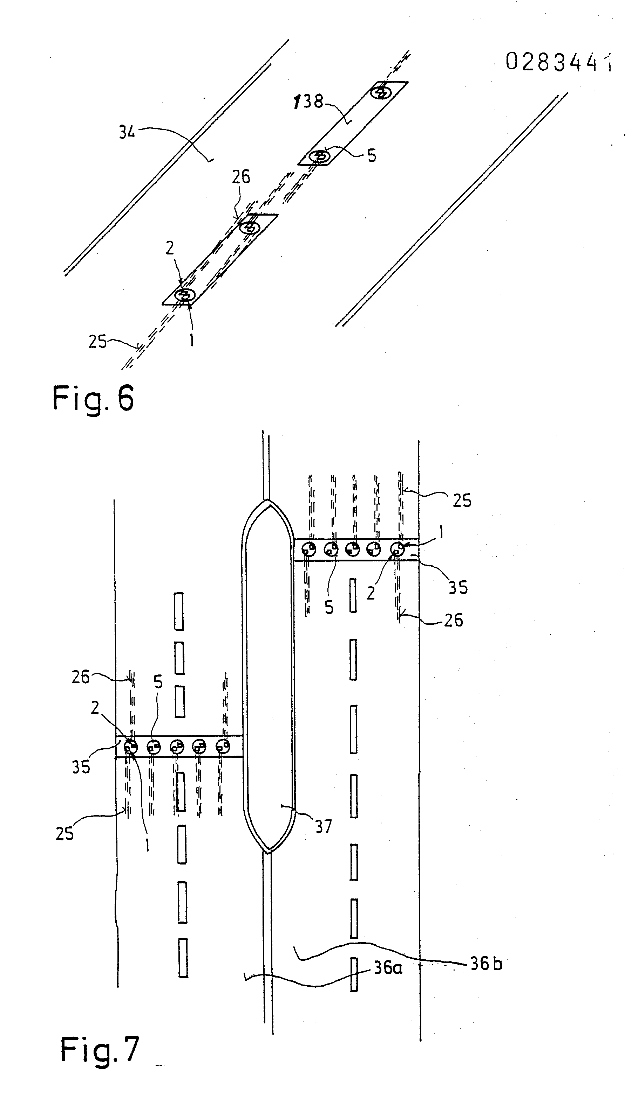

Fig. 6 und 7 Varianten einer möglichen Verwendung;

Fig. 8 einen Deckel mit Schliff und Filter im Schnitt nach der Linie VIII, VIII der Fig.9;

Fig. 9 einen Schnitt nach der Linie IX, IX der Fig.8;

Fig.10 bis 12 Varianten eines Deckels mit verschiedenen Schliffen ähnlich der Schnittdarstellung von Fig.9;

Fig.13 einen Schnitt durch den Deckel nach der Linie XIII, XIII der Fig.9.

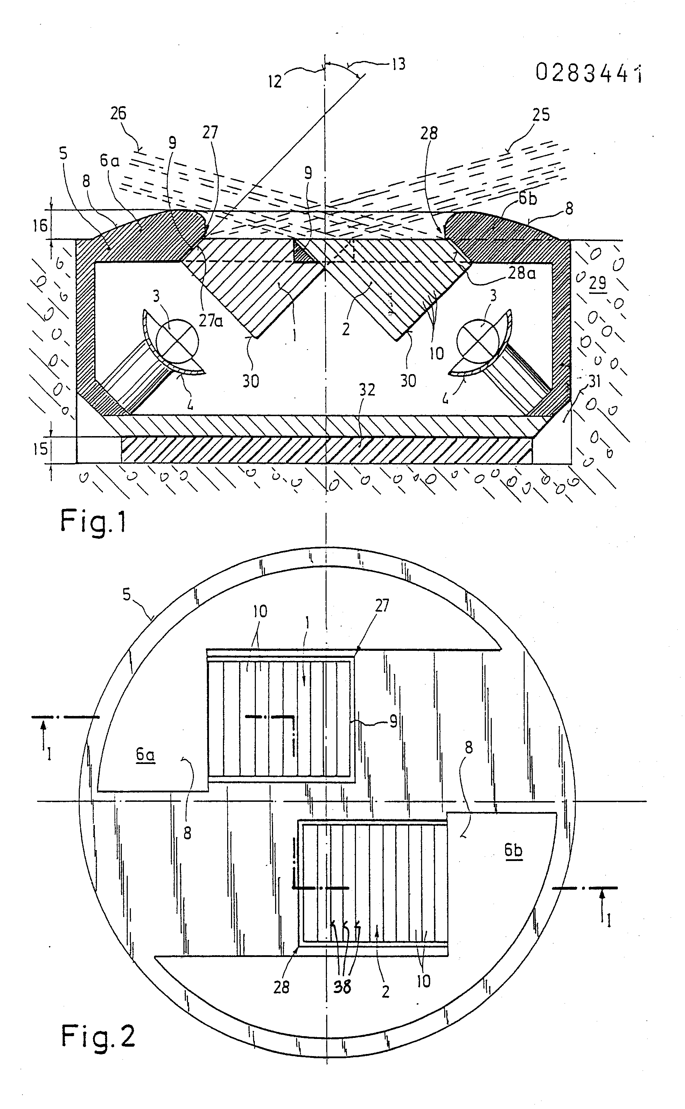

Die schematische Darstellung eines Beleuchtungskörpers mit flachem Lichtaustritt in Fig.1 zeigt einen topfförmig ausgebildeten Prismenhalter 5, der in nicht näher dargestellter Weise zerlegbar ist. Der Prismenhalter 5 besitzt an seiner Oberseite zwei Oeffnungen 27 und 28, die mit ihren Aufnahmeflächen 27a und 28a zwei als transparente Deckel ausgebildete Prismenraster 1 und 2 aufnehmen (im folgenden Prismenraster genannt).

Zum Zwecke der dauerhaften und luftdichten Verbindung ist zwischen den Prismenrastern 1 und 2 und den Aufnahmeflächen 27a und 28a ein Einkomponentenklebstoff 9 auf Epoxybasis aufgebracht. Der Kleber 9 verfügt über eine gute Elastizität, ausgezeichnete Haftung und gute Alterungsbeständigkeit.

Die Aufnahmeflächen 27a bzw. 28a verlaufen in einem Winkel 13 von 45°zur Lotrechten 12. Dieser Winkel 13 ergibt sich in direkter Abhängigkeit von den Brechungseigenschaften des Glases der Prismenraster, des Lichteintrittwinkels, sowie des gewünschten Lichtaustrittswinkels an der Oberläche der Prismenraster. Ausserdem wird durch einen solchen Winkel 13 auch die Zugscherfestigkeit des Klebers zur Drucküberfragung vom Prismenraster auf den Prismenhalter gut ausgenutzt.

Die Prismenraster 1,2 bestehen aus miteinander verklebten Borosilikatglasscheiben 10.

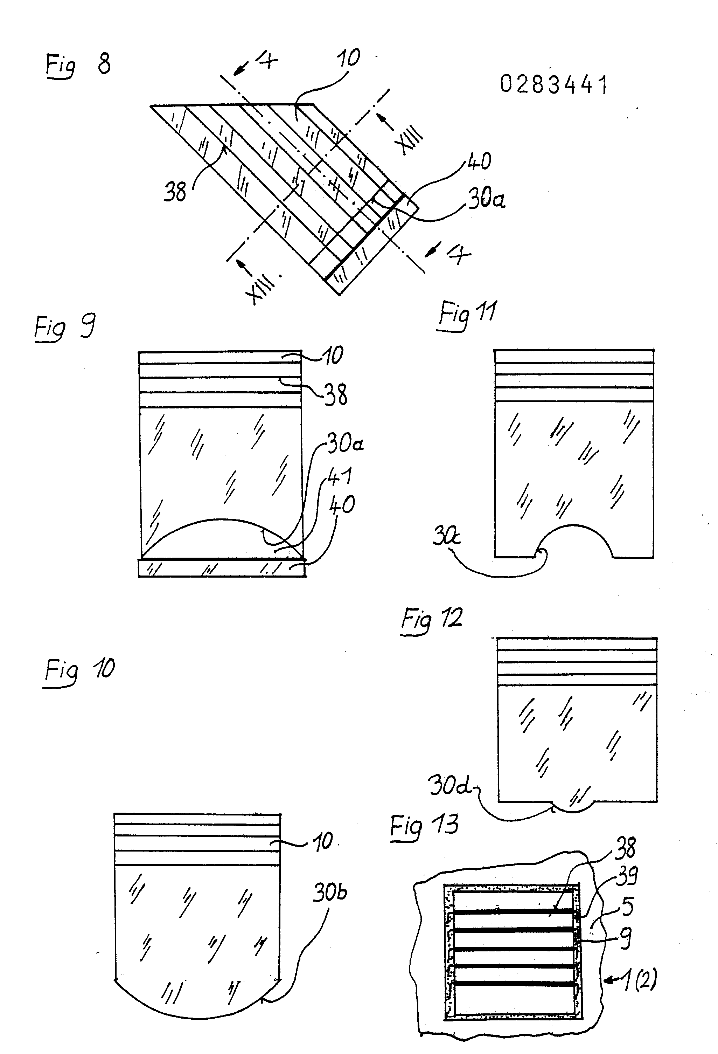

Dazwischen könnten, wie aus Fig.13 ersichtlich, Metallfolien (39) zur besseren Reflexion zwischen den Scheiben 10 und zur besseren Wärmeabfuhr aus den Prismenrastern 1,2 in den Pris menhalter 5 mit eingeklebt sein. Die Enden der Metallfolien 39 sind umgebogen und mit dem Prismenhalter verklemmt und verklebt, wodurch sich eine gute Wärmeleitung ergibt. Die Wärme im Prismenraster 1,2 entsteht durch die teilweise Umwandlung von Licht in Wärme im an sich gut isolierenden Glas. Wird sie nicht in ausreichendem Masse abgeführt, so kann der Raster Schaden nehmen.

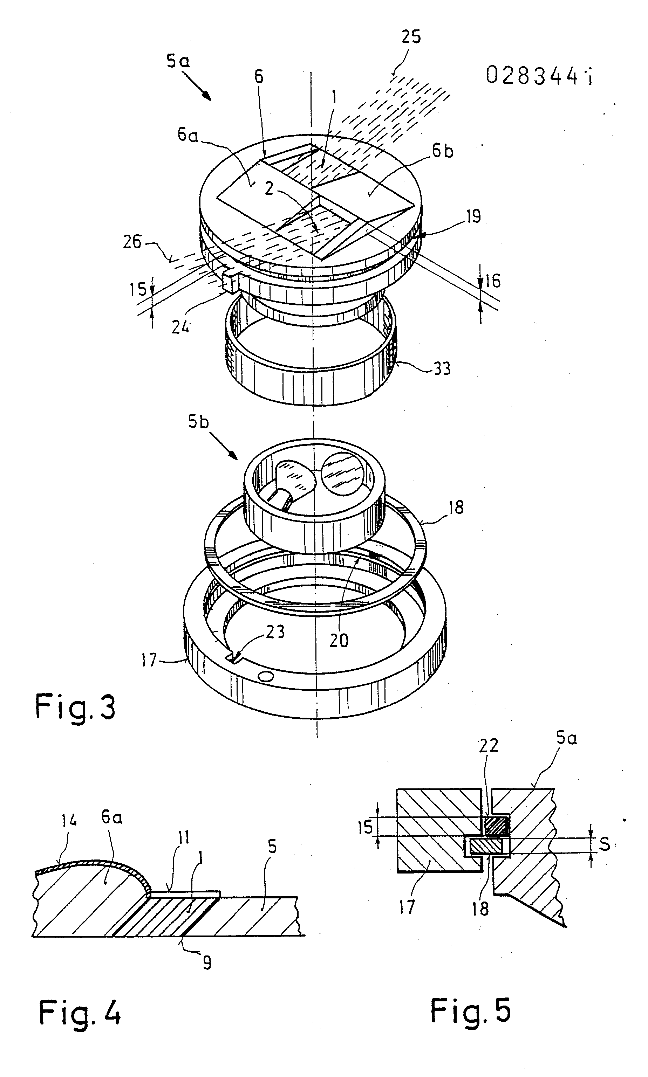

Zum Schutz der Oberseite der Prismenraster 1 und 2 ist die Oberfläche der Oberseite des Prismenhalters 5 in Richtung zu den Prismenrastern 1 und 2 an den den Lichtstrahlen 25 und 26 abgewandten Seiten keilförmig (Fig.3 ) oder stromlinienförmig (Fig.1) ansteigend ausgebildet. Diese keilförmigen Erhebungen 6a, 6b setzen sich auch seitlich der Prismenraster 1, 2 fort, wie der Fig. 2 besser entnommen werden kann. Die Höhe 16 der Erhebungen 6a, 6b ist höchstens 1-5 mm. Die Oberfläche 8 der keilförmigen Erhebungen 6a, bzw. 6b ist stromlinienförmig ausgebildet, wodurch das Schleifen von Flugsand oder dgl. bei hohen Windgeschwindigkeiten, z.B. durch Düsenschub, auf der Oberseite der Prismenraster 1, 2 praktisch unterbunden wird.

In dem Prismenhalter 5, etwa unterhalb der Prismenraster 1 und 2, sind zwei Lichtquellen 3 mit je einem Parabolreflektor 4 vorgesehen. Sie senden ihre Lichtstrahlen in etwa senkrechter Richtung auf die Lichteintrittsflächen 30 der Prismenraster 1 und 2.

Der Prismenhalter 5 ist in einer Ausnehmung 31 in einer Rollbahn bzw. Fahrbahn 27 derart eingesetzt, dass lediglich die Erhebungen 6a und 6b die Oberseite der Fahrbahn 29 überragen. Zwischen der Unterseite des Prismenhalters 5 und dem Untergrund der Fahrbahn 29 ist eine elastische Schicht 32 aus Integralschaumstoff vorgesehen (Fig.1). Wird auf den Prismenhalter 5, bzw. auf dessen Oberseite, insbesonders auf die Erhebungen 6a und 6b, Kraft ausgeübt, so kann der Prismenhalter 5 - bedingt durch die Elastizität der Schicht 32 - gering- fügig nach unten ausweichen. Durch nicht dargestellte Massnahmen ist verhindert, dass sich der Prismenhalter 5 weiter aus der Ausnehmung 31 heraushebt als um die Höhe 16, die durch die maximale Höhe der Erhebungen 6a, bzw. 6b definiert ist. Die Schicht 32 besitzt eine Dicke 15, die der Höhe 16 entspricht. Die Integral-Ausbildung der Schicht verhindert das Eindringen von Wasser in die Poren des Schaumstoffes, wodurch die Schicht stets funktionstüchtig bleibt.

Die Stromversorgung der Lichtquellen 3 ist nicht näher dargestellt, erfolgt jedoch durch ein wasserdicht eingeführtes Stromkabel, das vorteilhafterweise in einen nicht dargestellten, an sich bekannten Hohlraum mit einer Domausbildung an der Unterseite des Prismenhalters eintritt.

Um eine speziell gerichtete Streuung der Lichtaustrittswinkel zu erreichen, ist der Prismenraster an seiner der Lichtquelle 3 zugewandten Seite bzw. an seiner Lichteintrittsfläche 30 mit einem konkaven oder konvexen Anschliff 30a,c oder b,d (Fig.8,9,11 oder 10,12) versehen, sodass die an sich parallelen Lichtstrahlen aus dem Parabolreflektor in die gewünschte Richtung gestrahlt bzw. abgelenkt werden. Der Anschliff kann auch in mehrere Anschliffe mit unterschiedlichen Radien unterteilt werden. Dabei soll der Einstrahlwinkel am Anschliff 30 so gewählt sein, dass der Ausstrahlwinkel der betreffenden Strahlen an der Lichtaustrittsfläche der Prismenraster 1,2 gleich ist, bzw, dass beide Winkel dem gewünschten Streuwinkel in horizontaler Richtung entsprechen. Die angegebenen Anschliffformen sind die, die in der Praxis häufig vorkommen werden. Es liegen im Rahmen der Erfindung aber auch ebene Anschliffe oder Facettenschliffe, mit denen man ganz spezielle Streumuster erreichen kann, was allerdings in optischen Berechnungen oder Versuchen determiniert werden muss. Jedenfalls erspart der erfindungsgemässe Anschliff zusätzliche Vorschaltsysteme wie Linsen oder Prismen.

Der Anschliff könnte auch geteilt sein, um einerseits die gewünschte Streuung in horizontaler Ebene und andererseits eine gleichmässigere Lichtverteilung im Leuchtkegel zu erzielen. Dies ist von Bedeutung, wenn die von der Lichtquelle gelieferte Lichtdichte stark unterschiedlich ist (z.B.in der Mitte der Lichtstrahlen). Die Zweiteilung kann z.B. so sein, dass ein konvexer Schliff 30b gemäss Fig.10 vorgesehen ist, der in der Mitte einen kleineren konkaven Anschliff 30c gemäss der Fig.11 trägt oder umgekehrt.

Wird zwischen der Lichtquelle 3 und der Lichteintrittsfläche 30 noch ein Filter 40 vorgesehen, so verbessern sich die thermischen Eigenschaften des Prismenrasters 1,2, wobei der Raum 41 zwischen dem Filter 40 und dem Anschliff als Wärmeisolationspolster dient. Wenn der Reflektor 4 als Kaltlichtreflektor ausgebildet ist, d.h. Wärmestrahlen auch durch sich hindurchlässt, reduziert sich abermals die thermische Belastung des Prismenrasters 1,2. Gegebenenfalls kann auch ein entsprechendes Wärmestrahlenfilter vorgeschaltet werden. Wenn der Raum 41 evakuiert ist, verhindert er auch die Abgabe von Konvektionswärme aus der Umgebung der Lichtquelle 3 an den Prismenraster 1,2.

Aus Fig.2 ist ersichtlich, dass die Erhebungen 6a, bzw. 6b etwa L-förmig ausgebildet sind und sich über der geometrischen Mitte der Oberseite des Prismenhalters 5 überschneiden, so dass in länglicher harter Gegenstand, wie beispielsweise die Unterkante eines Schneeräumgerätes, mit voller Kraft über die Beleuchtungsvorrichtung schieben kann, ohne dabei das Glas der Prismenraster 1,2 zu berühren. Die Flächen vor den Prismenrastern 1,2 in Richtung von deren Lichtstrahlen 25,26 sind flach ausgebildet, um auch kleine Abstrahlwinkel der Lichtstrahlen 25 und 26 über der Bodenfläche zu ermöglichen.

Fig.3 zeigt eine geringfügig anders ausgestaltete Variante einer Flugfeldbeleuchtung, bei der die Prismenraster 1, 2 derart versetzt sind, dass ihre dem jeweiligen Lichtstrahl 25, bzw. 26 abgewandten Kanten auf einer Linie liegen. Die Erhebungen 6a, 6b sind zu einer Gesamterhebung 6 mit maximaler Höhe 16 von 1-5 mm integriert. Durch diese Anordnung lässt sich der Beleuchtungskörper sehr klein halten. Der Prismenhalter 5a ist mit einem Unterteil 5b durch einen Schrumpfschlauch 33 verbindbar. Der Prismenhalter 5a weist an seinem Umfang eine Nut 19 auf, deren Höhe sich aus der Dicke S eines Seegerringes 18 plus der Höhe 15 zusammensetzt. Der Seegerring 18 übernimmt die axiale Halterung des Prismenhalters 5a in einem Haltering 17, bzw. in dessen Nut 20. Die Höhe 15 entspricht, wie der Fig. 5 besser entnommen werden kann, der Höhe eines elastischen Ringes 22, der oberhalb des Seegerringes 18 in der Nut 19 angeordnet ist.

Zur drehsicheren Führung des Prismenhalters 5a in dem Haltering 17 weist dieser eine Nut 23 auf, in die eine Feder 24 am Prismenhalter 5a eingreift.

Durch die dargestellten Figuren ist die Erfindung nicht eingeschränkt. Beispielsweise können die Prismenraster 1, 2 an ihrer Oberseite auch mit einer leichten Schrägung von ca. 1° versehen sein, um den Lichtaustritt zu vereinfachen und um die Selbstreinigung der Oberseite der Prismenraster 1,2, beispielsweise durch Regen, zu erhöhen. Die Anwendung einer erfindungsgemässen Beleuchtung ist keineswegs auf Flugfelder und Strassen eingeschränkt; so ist beispielsweise eine Anwendung unter Wasser, in Ausstellungshallen als Unterflurbeleuchtung, an Decken, als in diese plan eingebundene Beleuchtungskörper, usw. möglich. Als Glas kommen auch andere Mischungen, ebenso wie Kunststoffe o.dgl. in Frage.

BezugszeichenlistePrismenraster 1 und 2, (Deckel)
Lichtquelle 3,
Reflektor 4,
Prismenhalter 5,
keilförmige Erhebungen 6a, 6b, 6
Oberfläche 8,
Kleber 9,
Borosilikatscheiben 10
Schutzabdeckung 11,
Lotrechte 12
Winkel 13,
Schutzschicht 14,
Federung 15,
Höhe 16,
Haltering 17,
Seegerring 18,
Nut 19,
Nut 20,
Verbreiterung 21,
elastischer Ring 22,
Nut 23,
Feder 24,
Lichtstrahl 25,
Lichtstrahl 26,
Oeffnungen 27 und 28
Rollbahn 29,
Lichteintrittsfläche 30, Anschliff 30a-d
Ausnehmung 31,
elastische Schicht 32,
unterbrochene Leitlinie 33
Fahrbahn 34
Sicherheitsmarkierung 35
geteilte Fahrbahn 36a,36b
Hindernis 37
Bodenmarkierung 138
Trennschicht 38
Metallfolie 39
Filterscheibe 40
Raum 41

**Patentansprüche**

1. Beleuchtungskörper für den Einbau in eine Ebene, gekennzeichnet durch die Kombination folgender Merkmale:

a. zwei flache Prismenraster (1,2) sind in Oeffnungen (27,28) eines flachen Prismenhalters (5) horizontal eingesetzt;

b. unter jedem Prismenraster (1,2) ist eine Lichtquelle (3) mit Reflektor (4) angeordnet;

c. die Lichtquellen (3), der jeweils zugehörige Prismenraster (1,2) und der jeweilige Lichtstrahl (25,26) sind gegensinnig zueinander angeordnet und seitlich gegeneinander versetzt;

d. die Oberfläche der Oberseite des Prismenhalters (5) ist, zumindest in Richtung zum Prismenraster (1,2), bzw. in Richtung zum Lichtstrahl (25,26), an der diesem abgewandten Seite des Prismenrasters (1,2) und/oder seitlich desselben keilförmig oder stromlinienförmig ansteigend ausgebildet.

2. Beleuchtungskörper nach Anspruch 1, dadurch gekennzeichnet, dass jeder Prismenraster (1,2) an den die jeweils zugehörige Oeffnung (27,28) umrandenden Aufnahmeflächen (27a,28a) in dem Prismenhalter (5) mittels eines (vorzugsweise Einkomponenten-) Klebers (9) befestigt ist, wobei zumindest eine Fläche (27a,28) im Prismenhalter (5) für die Aufnahme jedes Prismenrasters (1,2) einen Winkel (13) von etwa 45 Grad zur Lotrechten (12) aufweist. (Fig1,2)

3. Beleuchtungskörper nach einem der vorhergehenden Ansprüche, dadurch gekennzeichnet, dass die Prismenraster (1,2) aus geschichteten Glasscheiben (10), z.B. aus Borosilikatglas, aufgebaut sind, die an ihren Trennschichten (38) miteinander mittels eines (vorzugsweise Einkomponenten-) Klebers (9) verklebt sind und wobei das Material des Prismenrasters (1,2) vorzugsweise einen Brechungswinkel von etwa 1.47 aufweist.

4. Beleuchtungskörper nach Anspruch 3 oder 4, dadurch gekennzeichnet, dass als Kleber (9) für die Glasscheiben (10), bzw. für die Prismenraster (1,2) ein wärmeehärtbarer Einkomponenten-Kleber auf Epoxybasis mit einer Schlagscherfestigkeit von 30-40 N/mm2, einer Zugscherfestigkeit von 30-60 N/mm2 und einer Schälfestigkeit (gemessen nach dem Boingverfahren) von 10-13 N/mm vorgesehen ist.

5. Beleuchtungskörper nach einem der vorhergehenden Ansprüche, dadurch gekennzeichnet, dass wenigstens die beiden äusseren Trennschichten (38) je eine Metallfolie (39), vorzugsweise mit einer Dicke von 0.1 mm, z.B. aus Aluminium enthalten, die gegebenenfalls zumindest an einer Seite die räumliche Erstreckung des Deckels (1,2) überragen und dabei insbesondere zwischen dem Deckel (1,2) und dem Prismenhalter (5) abgebogen und eingeklemmt und/oder eingeklebt sind. (Fig.13)

6. Beleuchtungsvorrichtung nach einem der vorhergehenden Ansprüche, dadurch gekennzeichnet, dass zwischen der Lichteintrittsfläche (30) und der Lichtquelle (3) eine vorzugsweise planparallele Filterscheibe (40) für Farblicht- und/oder Wärmestrahlung angeordnet ist, wobei gegebenenfalls der Raum (41) zwischen der Filterscheibe (40) und der Eintrittsfläche (30a) gasdicht abgeschlossen und insbesondere evakuiert ist. (Fig.8,9)

7. Beleuchtungskörper nach einem der vorhergehenden Ansprüche, dadurch gekennzeichnet, dass der Prismenhalter (5) in senkrechter Richtung federnd gehalten ist, wobei der Federweg (15) höchstens der maximalen Höhe (16) der keilförmigen Erhebungen (6a,6b) entspricht (Fig. 2,3 und 5).

8. Beleuchtungskörper nach Anspruch 7, dadurch gekennzeichnet, dass der Prismenhalter (5) in einem Haltering (17) verriegelt - sowie vorzugsweise mittels axial gerichteter Nut (23) und Feder (24) verdrehsicher - gehalten ist, wobei als Verriege lungselement ein Seegerring (18) vorgesehen ist, der in gegengleichen Nuten (19,20) im Prismenhalter (5), bzw. im Haltering (17) anordenbar ist, wobei vorzugsweise zumindest eine der Nuten (19) zumindest um das Mass der maximalen Höhe (16) der keilförmigen Erhebung (6a,6b) breiter als der Seegerring (18) ausgebildet ist, und dass in dieser Verbreiterung (21) ein elastischer Ring (22), vorzugsweise aus elastomerem Material, angeordnet ist (Fig. 3 und 5).

9. Beleuchtungskörper nach einem der vorhergehenden Ansprüche, dadurch gekennzeichnet, dass die Lichteintrittsfläche (30) einen gekrümmten Schliff (30a-d) aufweist, vorzugsweise einen Zylinderschliff, der gegebenenfalls konvex (Fig.10,12) ausgebildet ist und dessen Radius im wesentlichen zwischen 20 und 220 mm liegt und durch den gewünschten Streuwinkel bestimmt ist, wobei die Achse des Zylinders im wesentlichen normal zu den Trennschichten (38) bzw. deren Erstreckungsebenen liegt, wobei der Schliff (30c,d) gegebenenfalls nur im Bereich des mittleren Drittels des Deckels (1,2) ausgebildet ist,und/oder dass der Reflektor (4) als - vorzugsweise rotationssymmetrischer - Parabolreflektor ausgebildet und/oder gegebenenfalls für langwellige Wärmestrahlen durchlässig ist. (Fig.9 bis 12 und/oder 3)

10. Beleuchtungskörper nach einem der vorhergehenden Ansprüche, dadurch gekennzeichnet, dass die Prismenraster (1,2) und/oder die Oberfläche der Erhebungen (6,6a) eine Schutzabdeckung (11,14) aufweisen, z.B. aus einem durchsichtigen,vom Prismenraster (1,2) ablösbaren Kunststoff, bzw. aus einem schlag- und/oder abrasionsfesten Lack, oder aus Eloxal auf dem aus Aluminiumguss bestehenden Prismenhalter (5). (Fig.4)

11. Verwendung eines Beleuchtungskörpers nach einem der vorhergehenden Ansprüche als integrierter Bestandteil in Bodenmarkierungen an Strassen für den öffentlichen Verkehr.

Fig.1

Fig.2

0283441

0283441

Fig. 3

Fig. 4

Fig. 5

**1**38

## Fig. 6

## Fig. 7

Fig 8

Fig 9

Fig 10

Fig 11

Fig 12

Fig 13

0283441